(19) Europäisches Patentamt

European Patent Office

Office européen des brevets

(11) **EP 0 708 808 B1**

(12) **EUROPEAN PATENT SPECIFICATION**

(45) Date of publication and mention
of the grant of the patent:
**16.06.1999 Bulletin 1999/24**

(21) Application number: **94921537.0**

(22) Date of filing: **15.07.1994**

(51) Int Cl.6: **C10L 1/02**, C10L 1/10,
C10L 1/18

(86) International application number:
**PCT/AU94/00401**

(87) International publication number:
**WO 95/02654 (26.01.1995 Gazette 1995/05)**

(54) **FUEL BLENDS**

TREIBSTOFFGEMISCHE

MELANGES DE CARBURANT

(84) Designated Contracting States:
**AT BE CH DE DK ES FR GB IT LI NL PT SE**

(30) Priority: **16.07.1993 AU PM000493**

(43) Date of publication of application:
**01.05.1996 Bulletin 1996/18**

(73) Proprietor: **VICTORIAN CHEMICAL
INTERNATIONAL PTY. LTD.
Richmond, VIC 3121 (AU)**

(72) Inventors:
• **KILLICK, Robert, William
Mount Waverley, VIC 3149 (AU)**
• **WRIGLEY, Peter, Ronald
Blackburn South, VIC 3130 (AU)**

• **PARNABY, Lawrence, Harold
Blackburn South, VIC 3130 (AU)**

(74) Representative: **Waldren, Robin Michael
MARKS & CLERK,
57-60 Lincoln's Inn Fields
London WC2A 3LS (GB)**

(56) References cited:
| | |
|---|---|
| WO-A-93/24593 | AU-A- 2 412 945 |
| AU-A- 7 765 681 | GB-A- 2 090 611 |
| GB-A- 2 090 612 | GB-A- 2 090 613 |
| US-A- 3 667 152 | US-A- 3 672 854 |
| US-A- 4 248 182 | US-A- 4 405 337 |
| US-A- 4 920 691 | US-A- 5 203 878 |

## Description

## Field of the Invention

This invention relates to fuel blend compositions including a hydrocarbon liquid, low-alkyl alcohol and organic ester and preferably a fatty acid. Additionally, the invention relates to a fuel additive composition including a low-alkyl alcohol, organic ester and preferably a fatty acid.

## Background to the Invention

Diesel oil, due to its cost and availability, continues to be the backbone for industry around the world being the principal fuel for use in trucks, ships, trains, some cars and other automotive equipment and different stationary types of engines.

It is well recognised that the combustion of diesel fuel in engines can be hazardous to the environment. In particular, the partial combustion of diesel fuel to carbon, carbon monoxide, and nitrogen oxides creates noxious black exhaust gases which are pollutants. This problem is particularly observable in trucks and other automotive vehicles where noxious black exhaust gases can be seen being released into the environment.

Attempts have been made over the years to address the environmental concerns associated with exhaust fumes from engines by using alcohols such as methanol (methyl alcohol) or ethanol (ethyl alcohol) as fuels. Such attempts, for instance, have generally established that 15% of ethanol and 85% diesel oil provides an acceptable burning capacity without the necessity of modifying existing diesel engines.

The problem with using ethanol or methanol as a fuel in conjunction with diesel oil is that ethanol or methanol are immiscible with diesel oil, that is, they cannot be uniformly mixed or blended into one phase without rapid separation into their component parts. Since they cannot be uniformly mixed into one phase and stored for easy use, the components must be mixed just prior to use by, for example, having independent fuel tanks with the components independently pumped and mixed just before the combined fuel is injected into the fuel chamber. Such a system is currently being used in the bus fleet of the Des Moines Transit Authority, Iowa, USA.

One attempt to address the problem of immiscibility was to form an emulsion of the diesel oil and ethanol using an emulsifier. An example of this is in Australian Patent No. 544,728 which discloses a composition having 84.5% diesel oil, 15% hydrated ethanol and 0.5% emulsifier. The emulsifier is of the styrene butadiene co-polymer type in admixture with a high molecular weight polyethylene glycol dissolved in xylene. This mixture can show both batch to batch variation and instability as the diesel and ethanol separate in the fuel tank.

An attempt has also been made to address the problem of immiscibility by forming a blend comprising a petroleum fuel, methanol and a higher alcohol having 10-16 carbon atoms as a solvent for the petroleum fuel and methanol. An example of this is disclosed in US Patent No. 4,527,995.

A further anempt to address the problem of immiscibility is disclosed in UK Patent Application No. GB 2,090,611 where combustible compositions are claimed containing gas oils, methanol and a fatty acid ester for use in diesel engines. The claimed combustible compositions comprises from 20% to 90% by volume of at least one gas oil, from 5% to 50% by volume of methanol and from 5% to 60% by volume of at least one ($C_1$ - $C_3$) alkyl ester of a ($C_6$ - $C_{22}$) saturated or unsaturated fatty acid. The specification states that alcohols heavier than methanol such as butanol must be added in substantial portions and do not improve the cetane number.

The article entitled "Diesel Oil Substitution by Processed Plant Oils - Engine and Vehicle Results" published in 1982 by two authors from Volkswagen do Brasil S.A. Brazil, compares tests conducted using a straight methyl ester of soya bean oil (MESO) as a fuel with a 75-25 gasoil-MESO blend and a 68-23-9 gasoil-MESO-ethanol (anhydrous) blend. The article provides that plant-oil monoesters used as gasoil extenders serve as co-solvents between gasoil and ethanol, thus permitting ready use of otherwise-incompatible ethanol. However, the article provides that an increase in proportion of ester in the gasoil from a 25% ester content onwards results in the ethanol being substantially compatible in the gasoil.

In subsequent investigations leading to the present invention, it has surprisingly been found that fatty acids and/or organic esters having up to 15% by volume in the fuel blend composition function as a coupling agent between the hydrocarbon liquid and ethanol and/or n-propanol to form a single phase composition which is not prone to separation.

## Summary of the Invention

According to a first embodiment of the invention, there is provided a miscible fuel blend composition comprising:

    a hydrocarbon liquid which is diesel oil, gas oil or mixtures thereof;
    more than 0% and not in excess of 15% by volume of the total composition, a coupling agent comprising an organic ester component; and
    more than 0% and not in excess of 20% by volume of the total composition, an alcohol component which is exclusively selected from the light alcohols of ethanol, n-propanol and mixtures thereof.

Preferably the coupling agent further comprises a non-hydroxy fatty acid.

In a preferred embodiment of the invention the fatty acid and/or organic ester component is between 1.5% and 11% by volume.

In another preferred embodiment of the invention, the fatty acid and/or organic ester component is between 2% and 5% by volume.

The fatty acid component is derived preferably from natural oils and fats such as land, tallow and vegetable oils, for example, canola, palm, corn, sunflower and soya bean oils or from specific blends commercially produced by fatty acid manufacturers or from fatty acids made by synthetic means or mixtures thereof. The fatty acid is preferably "oleic acid". For those skilled in the art, this is understood to mean the commercially available liquid fatty acids in which the mono-unsaturated fatty acid is significantly present.

The organic ester component is selected preferably from fatty esters such as ethyl oleate, ethyl tallowate, iso-propyl oleate, butyl oleate, methyl oleate or methyl cocoate and/or other aromatic esters such as butyl benzoate and/or other aliphatic esters such as methyl acetate or mixtures thereof and/or dicarboxylic acid esters such as dioctyl maleate.

In a preferred embodiment of the invention, the hydrocarbon liquid (as hereinafter defined) component is at least 40% by volume of the total composition and more preferably between 75% and 88%.

The term hydrocarbon liquid, as used in the specification, means diesel oil and gas oil and mixtures thereof.

According to a preferred embodiment of the invention, there is provided a process for producing the above single phase fuel blend composition comprising the steps of:

a) adding the alcohol component to the hydrocarbon liquid to form an alcohol phase and an oil phase; thereafter
b) adding the mixture of step (a) to the coupling agent; and
c) mixing the resultant mixture until a single phase is formed.

In a further preferred embodiment of the invention, a process for producing the above single phase fuel blend comprising the steps of:

a) adding the alcohol component to the coupling agent; thereafter
b) adding the mixture of step (a) to the hydrocarbon liquid; and
c) mixing the resultant mixture until a single phase is formed.

## Examples

The carboxylate esters used in the examples are those manufactured at the premises of the Victorian Chemical Co., Richmond, Victoria, Australia and are sold under the "Esterol" brand name. The ethyl acetate was purchased from BP Chemicals Australia. The diesel oil is that purchased from pumps of major Australian oil companies such as Caltex Petroleum Pty Ltd. The ethanol (ethyl alcohol) is commercial material obtained from the CSR Distilleries, Yarraville Victoria, Australia and is known as Ethanol 100SG/F3 which contains 3% methanol.

The following is a non-limiting example of a process to produce Composition 1 below according to the invention.

Diesel oil (85ml) is placed in a 100ml bottle at ambient temperature and pressure. Ethanol (10.0 ml) is added to the bottle creating an oil phase and an alcohol phase. Methyl oleate (5.0ml) is then added, a stopper applied to the top of the bottle and the resultant mixture is shaken for a period of approximately 30 seconds or such less or further period of time to allow proper mixing of the liquids to take place and a single phase to form. The mixture was allowed to stand to allow the contents to settle. A single phase is observed.

Substantially the same method is used to produce the other compositions detailed below. Product blends were made (as percentage v/v) as follows.

| Composition 1 | |
| --- | --- |
| Diesel Oil | 85.0 |
| Ethanol | 10.0 |
| Methyl Oleate | 5.0 |
| | 100.0 |

| Composition 2 | |
| --- | --- |
| Diesel Oil | 80.0 |
| Ethanol | 15.0 |
| Ethyl Acetate | 5.0 |
| | 100.0 |

| Composition 3 | |
| --- | --- |
| Diesel Oil | 80.0 |
| Ethanol | 15.0 |
| Ethyl Tallowate | 5.0 |
| | 100.0 |

| Composition 4 | |
| --- | --- |
| Diesel Oil | 82.0 |
| Ethanol | 15.0 |
| Butyl Benzoate | 3.0 |
| | 100.0 |

| Composition 5 | |
|---|---|
| Diesel Oil | 81.0 |
| Ethanol | 15.0 |
| Ethyl Tallowate | 1.5 |
| Ethyl Acetate | 2.5 |
| | 100.0 |

| Composition 6 | |
|---|---|
| Gas Oil | 74.5 |
| Ethanol | 20.0 |
| Oleic Acid | 3.0 |
| Iso-Propyl Oleate | 2.5 |
| | 100.0 |

| Composition 7 | |
|---|---|
| Diesel Oil | 87.75 |
| Ethanol | 9.0 |
| Ethyl Oleate | 3.25 |
| | 100.0 |

| Composition 8 | |
|---|---|
| Diesel Oil | 94 |
| Ethanol | 5 |
| Ethyl Oleate | 1 |
| | 100 |

| Composition 9 | |
|---|---|
| Diesel Oil | 94.5 |
| Ethanol | 5.0 |
| Ethyl Oleate | 0.5 |
| | 100.0 |

| Composition 10 | |
|---|---|
| Diesel Oil | 94.8 |
| Ethanol | 5.0 |
| Ethyl Oleate | 0.2 |
| | 100.0 |

| Composition 11 | |
|---|---|
| Diesel Oil | 74 |
| Ethanol | 15 |
| Ethyl Oleate | 11 |
| | 100 |

| Composition 12 | |
|---|---|
| Diesel Oil | 81.5 |
| Ethanol | 15.0 |
| Ethyl Oleate | 3.5 |
| | 100.0 |

| Composition 13 | |
|---|---|
| Diesel Oil | 74.5 |
| Ethanol | 20.0 |
| Oleic Acid | 3.0 |
| Isopropyl Oleate | 2.5 |
| | 100.0 |

| Composition 14 | |
|---|---|
| Diesel Oil | 70 |
| Ethanol | 15 |
| Methyl Cocoate | 15 |
| | 100 |

| Composition 15 | |
|---|---|
| Diesel Oil | 77 |
| Ethanol | 15 |
| Methyl Cocoate | 8 |
| | 100 |

| Composition 16 | |
|---|---|
| Diesel Oil | 75 |
| Ethanol | 15 |
| Methyl Cocoate | 10 |
| | 100 |

| Composition 17 | |
|---|---|
| Diesel Oil | 78.5 |
| Ethanol | 0.5 |
| Ethyl Oleate | 6.5 |
| n-Propanol | 14.5 |
| | 100.0 |

| Composition 18 | |
|---|---|
| Diesel Oil | 85 |
| Ethanol | 10 |
| Methyl Oleate | 5 |
| | 100 |

| Composition 19 | |
| --- | --- |
| Diesel Oil | 77.5 |
| Ethanol | 15.0 |
| Ethyl Oleate | 5.0 |
| Ethyl Acetate | 2.5 |
| | 100.0 |

| Composition 20 | |
| --- | --- |
| Diesel Oil | 77 |
| Ethanol | 15 |
| Dioctyl maleate | 8 |
| | 100 |

| Composition 21 | |
| --- | --- |
| Diesel Oil | 65 |
| Ethanol | 20 |
| Ethyl Oleate | 15 |
| | 100 |

| Composition 22 | |
| --- | --- |
| Diesel Oil | 67 |
| Ethanol | 18 |
| Ethyl Oleate | 15 |
| | 100 |

All of the above Compositions had a single phase demonstrating the effectiveness of the use of levels of fatty acids and/or organic esters or mixtures thereof to blend hydrocarbon liquids such as diesel oil and low-alkyl alcohols such as ethanol into one phase. These compositions were tested over the typical temperatures in which normal fuels are to perform and were not found to be temperature sensitive.

In each of the Compositions listed above, the blend of diesel oil and low alkyl alcohol is in one phase and the blend was found to operate satisfactorily as a fuel.

Prime Mover Engine: A modern Mercedes Benz Prime Mover Engine Type 2228V Senes was tested on Composition No 3, under typical 40 tonne loads. There was no noticeable decrease in either power or fuel efficiency of the engine.

In respect of each of the above compositions, a fuel additive composition can be formed of the low-alkyl alcohol and the fatty acid and/or organic ester which may be added to the hydrocarbon liquids.

**Fuel Additive Compositions**

The Additive Composition is illustrated by the following non-limiting examples. The following is a non-limiting example of a process to produce Additive Composition 1 below according to the invention.

Ethanol (66.7 ml) is placed in a 100 ml bottle at ambient temperature and pressure. Methyl Oleate (33.3 ml) is added to the bottle to form a clear Additive Composition 1. Additive Composition 1 (15 ml) is then added to diesel oil (85 ml), a stopper applied to the top of the bottle and the resultant mixture is shaken for a period of approximately 30 seconds or less or for the period of time to allow proper mixing of the liquids to take place and a single phase to form.

Substantially the same method is used to produce other Additive Compositions as detailed below.

Additive Compositions were made (as percentages v-v) as follows:

| Additive Composition 1 | |
| --- | --- |
| Ethanol | 66.7 |
| Methyl Oleate | 33.3 |
| | 100.0 |

Additive Composition 1 (15 ml) was added to diesel oil (85 ml).

| Additive Composition 2 | |
| --- | --- |
| Ethanol | 75 |
| Ethyl Tallowate | 25 |
| | 100 |

Additive Composition 2 (20 ml) was added to diesel oil (80 ml).

| Additive Composition 3 | |
| --- | --- |
| Ethanol | 78.9 |
| Ethyl Acetate | 13.2 |
| Ethyl Tallowate | 7.9 |
| | 100.0 |

Additive Composition 3 (19 ml) was added to diesel oil (81 ml).

| Additive Composition 4 | |
| --- | --- |
| Ethanol | 78.4 |
| Oleic Acid | 11.8 |
| Iso Propyl Oleate | 9.8 |
| | 100.0 |

Additive Composition 4 (25.5 ml) was added to diesel oil (74.5 ml).

| Additive Composition 5 | |
|---|---|
| Ethanol | 50 |
| Methyl Cocoate | 50 |
| | 100 |

Additive Composition 5 (30 ml) was added to diesel oil (70 ml).

| Additive Composition 6 | |
|---|---|
| Ethanol | 66.7 |
| Ethyl Acetate | 11.1 |
| Ethyl Oleate | 22.2 |
| | 100.0 |

Additive Composition 6 (22.5 ml) was added to diesel oil (77.5 ml).

| Additive Composition 7 | |
|---|---|
| Ethanol | 57.2 |
| Ethyl Oleate | 42.8 |
| | 100.0 |

Additive Composition 7 (35 ml) was added to diesel oil (65 ml).

The resultant mixtures were allowed to stand to allow the contents to settle. All of the resultant mixtures had a single phase throughout the typical temperature range in which normal fuels are to perform and were found not to be temperature sensitive.

**Claims**

1. A miscible fuel blend composition comprising:

   a hydrocarbon liquid which is diesel oil, gas oil or mixtures thereof;
   more than 0% and not in excess of 15% by volume of the total composition, a coupling agent comprising an organic ester component; and
   more than 0% and not in excess of 20% by volume of the total composition, an alcohol component which is exclusively selected from the light alcohols of ethanol, n-propanol and mixtures thereof.

2. A miscible fuel blend composition according to claim 1, wherein the coupling agent further comprises a non-hydroxy fatty acid.

3. A miscible fuel blend composition according to either of claims 1 and 2, wherein the organic ester component is chosen from fatty acid esters, aromatic esters, ethyl acetate and/or dicarboxylic acid esters and mixtures thereof.

4. A miscible fuel blend composition according to claim 3, wherein the organic ester is derived from fatty acids selected from ethyl oleate, methyl oleate, ethyl tallowate, iso-propyl oleate, butyl oleate, methyl oleate or methyl cocoate.

5. A miscible fuel blend composition according to claim 3, wherein the aromatic ester is butyl benzoate.

6. A miscible fuel blend composition according to claim 3, wherein the dicarboxylic acid ester is dioctyl maleate.

7. A miscible fuel blend composition according to any preceding claim, wherein the coupling agent is between 1.5% - 11% by volume of the total composition.

8. A miscible fuel blend composition according to claim 7, wherein the coupling agent is between 2% - 5% by volume of the total composition.

9. A miscible fuel blend composition according to any of claims 2 to 8, wherein the fatty acid is derived from natural oils and fats, or vegetable oils, or is produced by synthetic means or any mixtures thereof.

10. A miscible fuel blend composition according to claim 9, wherein the natural oils and fats are lard and tallow.

11. A miscible fuel blend composition according to claim 9, wherein the vegetable oils are derived from canola, palm, corn, sunflower oil or soya bean oils.

12. A miscible fuel blend composition according to any preceding claim, wherein the hydrocarbon liquid is at least 40% by volume of the total composition.

13. A miscible fuel blend composition according to any preceding claim, wherein the hydrocarbon liquid is between 75% - 85% by volume of the total composition

14. A process for producing a single phase fuel blend composition according to any one of claims 1 to 13 comprising the steps of:

    a) adding the alcohol component to the hydrocarbon liquid to form an alcohol phase and an oil phase; thereafter
    b) adding the mixture of step (a) to the coupling agent; and
    c) mixing the resultant mixture until a single phase is formed.

15. A process for producing a single phase fuel blend according to any one of claims 1 to 13 comprising the steps of:

> a) adding the alcohol component to the coupling agent; thereafter
> b) adding the mixture of step (a) to the hydrocarbon liquid; and
> c) mixing the resultant mixture until a single phase is formed.

**Patentansprüche**

1. Zusammensetzung eines mischungsfähigen Kraftstoffgemisches, umfassend:

> einen flüssigen Kohlenwasserstoff, der Dieselöl ist, Gasöl oder Mischungen davon;
> mehr als 0% und nicht mehr als 15 Volumenprozent der Gesamtzusammensetzung ein Kupplungsmittel, das eine organische Ester-Komponente aufweist; sowie
> mehr als 0% und nicht mehr als 20 Volumenprozent der Gesamtzusammensetzung eine Alkohol-Komponente, die ausschließlich ausgewählt wird aus den leichten Alkoholen von Ethanol, n-Propanol und Mischungen davon.

2. Zusammensetzung eines mischungsfähigen Kraftstoffgemisches nach Anspruch 1, bei welcher das Kupplungsmittel ferner eine hydroxyfreie Fettsäure aufweist.

3. Zusammensetzung eines mischungsfähigen Kraftstoffgemisches nach Anspruch 1 und 2, bei welcher die organische Ester-Komponente ausgewählt wird aus Fettsäureestern, aromatischen Estern, Ethylacetat und/oder Dicarbonsäureestern sowie Mischungen davon.

4. Zusammensetzung eines mischungsfähigen Kraftstoffgemisches nach Anspruch 3, bei welcher der organische Ester abgeleitet wird von Fettsäuren, ausgewählt aus Ethyloleat, Methyloleat, Talgfettsäureethylester, Isopropyloleat, Butyloleat oder Kokosfettsäuremethylester.

5. Zusammensetzung eines mischungsfähigen Kraftstoffgemisches nach Anspruch 3, bei welcher der aromatische Ester Butylbenzoat ist.

6. Zusammensetzung eines mischungsfähigen Kraftstoffgemisches nach Anspruch 3, bei welcher der Dicarbonsäureester Dioctylmaleat ist.

7. Zusammensetzung eines mischungsfähigen Kraftstoffgemisches nach einem der vorgenannten Ansprüche, bei welcher das Kupplungsmittel zwischen 1,5 und 11 Volumenprozent der Gesamtzusammensetzung ausmacht.

8. Zusammensetzung eines mischungsfähigen Kraftstoffgemisches nach Anspruch 7, bei welcher das Kupplungsmittel zwischen 2 und 5 Volumenprozent der Gesamtzusammensetzung ausmacht.

9. Zusammensetzung eines mischungsfähigen Kraftstoffgemisches nach einem der Ansprüche 2 bis 8, bei welcher die Fettsäure abgeleitet wird von natürlichen Ölen und Fetten oder pflanzlichen Ölen, oder auf synthetischem Weg erzeugt wird, oder beliebige Mischungen davon.

10. Zusammensetzung eines mischungsfähigen Kraftstoffgemisches nach Anspruch 9, bei welcher die natürlichen Öle und Fette Schweinefett und Talg sind.

11. Zusammensetzung eines mischungsfähigen Kraftstoffgemisches nach Anspruch 9, bei welcher die pflanzlichen Öle abgeleitet werden aus Rapsölen, Palmölen, Maiskeimölen, Sonnenblumenölen oder Sojabohnenölen.

12. Zusammensetzung eines mischungsfähigen Kraftstoffgemisches nach einem der vorgenannten Ansprüche, bei welcher der flüssige Kohlenwasserstoff mindestens 40 Volumenprozent der Gesamtzusammensetzung ausmacht.

13. Zusammensetzung eines mischungsfähigen Kraftstoffgemisches nach einem der vorgenannten Ansprüche, bei welcher der flüssige Kohlenwasserstoff zwischen 75 und 85 Volumenprozent der Gesamtzusammensetzung ausmacht.

14. Verfahren zum Herstellen einer einphasigen Zusammensetzung eines Kraftstoffgemisches nach einem der Ansprüche 1 bis 13, umfassend die Schritte:

> a) Zusetzen der Alkohol-Komponente zu dem flüssigen Kohlenwasserstoff, um eine Alkohol-Phase und eine Öl-Phase zu erzeugen; danach
> b) Zusetzen der Mischung von Schritt (a) zu dem Kupplungsmittel; und
> c) Mischen des resultierenden Gemisches, bis eine einzelne Phase ausgebildet ist.

15. Verfahren zum Herstellen eines einphasigen Kraftstoffgemisches nach einem der Ansprüche 1 bis 13, umfassend die Schritte:

> a) Zusetzen der Alkohol -Komponente zu dem Kupplungsmittel; danach

b) Zusetzen der Mischung von Schritt (a) zu dem flüssigen Kohlenwasserstoff; sowie
c) Mischen des resultierenden Gemisches, bis eine einzelne Phase ausgebildet ist.

## Revendications

1. Composition de mélange de carburant miscible, comprenant:

   un hydrocarbure liquide qui est un carburant diesel, un gasoil ou des mélanges de ceux-ci; plus de 0% et pas plus de 15% en volume, par rapport à la composition totale, d'un agent de couplage comprenant un constituant ester organique; et plus de 0% et pas plus de 20% en volume, par rapport à la composition totale, d'un constituant alcoolique qui est exclusivement choisi parmi les alcools légers éthanol, n-propanol et les mélanges de ceux-ci.

2. Composition de mélange de carburant miscible selon la revendication 1, dans laquelle l'agent de couplage comprend en outre un acide gras non hydroxyle.

3. Composition de mélange de carburant miscible selon l'une des revendications 1 et 2, dans laquelle le constituant ester organique est choisi parmi les esters d'acide gras, les esters aromatiques, l'acétate d'éthyle et/ou les esters des acides dicarboxyliques et des mélanges de ceux-ci.

4. Composition de mélange de carburant miscible selon la revendication 3, dans laquelle l'ester organique provient d'acides gras choisis parmi l'oléate d'éthyle, l'oléate de méthyle, le suifate d'éthyle, l'oléate d'isopropyle, l'oléate de butyle ou le cocoate de méthyle.

5. Composition de mélange de carburant miscible selon la revendication 3, dans laquelle l'ester aromatique est le benzoate de butyle.

6. Composition de mélange de carburant miscible selon la revendication 3, dans laquelle l'ester d'acide dicarboxylique est le maléate de dioctyle.

7. Composition de mélange de carburant miscible selon l'une quelconque des revendications précédentes, dans laquelle l'agent de couplage représente 1,5-11% en volume de la composition totale.

8. Composition de mélange de carburant miscible selon la revendication 7, dans laquelle l'agent de couplage représente 2-5% en volume de la composition totale.

9. Composition de mélange de carburant miscible selon l'une quelconque des revendications 2 à 8, dans laquelle l'acide gras provient d'huiles et graisses naturelles, ou d'huiles végétales, ou est produit par des moyens synthétiques, ou tous mélanges de ceux-ci.

10. Composition de mélange de carburant miscible selon la revendication 9, dans laquelle les huiles et graisses naturelles sont le lard et le suif.

11. Composition de mélange de carburant miscible selon la revendication 9, dans laquelle les huiles végétales proviennent d'huile de colza, de palme, de maïs, de tournesol ou d'huile de soja.

12. Composition de mélange de carburant miscible selon l'une quelconque des revendications précédentes, dans laquelle le liquide hydrocarboné représente au moins 40% en volume de la composition totale.

13. Composition de mélange de carburant miscible selon l'une quelconque des revendications précédentes, dans laquelle le liquide hydrocarboné représente 75-85% en volume de la composition totale.

14. Procédé pour produire une composition de mélange de carburant à phase unique selon l'une quelconque des revendications 1 à 13, comprenant les étapes consistant:

   a) à ajouter le constituant alcoolique au liquide hydrocarboné pour former une phase alcoolique et une phase huileuse; puis
   b) à ajouter le mélange de l'étape (a) à l'agent de couplage; et
   c) à mélanger le mélange résultant jusqu'à ce qu'une phase unique soit formée.

15. Procédé pour produire un mélange de carburant à phase unique selon l'une quelconque des revendications 1 à 13, comprenant les étapes consistant:

   a) à ajouter le constituant alcoolique à l'agent de couplage; puis
   b) à ajouter le mélange de l'étape (a) au liquide hydrocarboné; et
   c) à mélanger le mélange résultant jusqu'à ce qu'une phase unique soit formée.